# EUROPEAN PATENT APPLICATION

(11) **EP 3 889 930 A1**
(43) Date of publication of application: **06.10.2021**
(21) Application number: 19890523.4
(22) Date of filing: 30.10.2019
(51) Int. Cl.: G08B 17/00, G08B 21/10, G08B 25/10, H04M 11/04

(54) **CONTROL SYSTEM, PROGRAM, AND CONTROL METHOD**

(30) Priority: 30.11.2018 JP 2018226061
(71) Applicant: Panasonic Intellectual Property Management Co., Ltd., Osaka-shi, Osaka 540-6207 (JP)
(72) Inventor: TANAKA, Keiichi, Osaka-shi, Osaka 540-6207 (JP); TAKAHASHI, Hideaki, Osaka-shi, Osaka 540-6207 (JP); CHINZAKA, Mai, Osaka-shi, Osaka 540-6207 (JP)
(74) Representative: Appelt, Christian W.
(86) International application number: PCT/JP2019/042451
(87) International publication number: WO 2020/110566

(57) **Abstract**

Provided are a control system, a program, and a control method, all of which are designed to allow the user of a facility to learn that the presence of a fire has been detected and to determine the credibility of information about the fire detection. A control system (1) includes a first acquisition unit (101), a second acquisition unit (102), and a notification processing unit (103). The first acquisition unit (101) acquires disaster presence information. The second acquisition unit (102) acquires state information. The notification processing unit (103) provides first alarm information when the disaster presence information acquired indicates that the presence of a disaster has been detected and the state information satisfies a first decision condition. The notification processing unit (103) provides second alarm information when the disaster presence information indicates that the presence of the disaster has been detected and the state information satisfies a second decision condition. The notification processing unit (103) provides the state information such that the state information is included in the alarm information being provided, and/or changes a mode of display of the first alarm information and a mode of notification of the second alarm information.

## Description

### Technical Field

The present disclosure generally relates to a control system, a program, and a control method, and more particularly relates to a control system, a program, and a control method, all of which are designed to provide the user with information about a disaster detected.

### Background Art

Patent Literature 1 discloses an exemplary known fire alarm device. The fire alarm device includes: a fire detection unit for determining whether or not either a temperature is greater than a fire threshold value and deciding, when finding the temperature greater than the fire threshold value, that a fire should be present, thereby detecting the presence of the fire; and an alarm unit for lighting, when detecting the presence of the fire, an indicating lamp as a fire warning and emitting an alarm sound as an alert to the presence of the fire. Thus, when the presence of a fire is detected, an alarm sound is emitted within a residence where the fire alarm device is installed.

Such a fire alarm device may possibly detect the presence of a fire erroneously. When a resident of the dwelling house (or a person who has something to do with a facility (hereinafter referred to as a "user of the facility") is present in the room, he or she may determine, by the alarm sound, whether or not the presence of the fire (or a disaster) has been detected erroneously. However, when the resident or the user is absent from the room, he or she cannot learn that the presence of the fire has been detected or determine the credibility of information about the fire detection.

### Citation List

### Patent Literature

Patent Literature 1: JP 2016-192117 A

### Summary of Invention

In view of the foregoing background, it is therefore an object of the present disclosure to provide a control system, a program, and a control method, all of which are designed to allow a user of a facility to learn that the presence of the fire has been detected and to determine the credibility of information about the fire detection.

A control system according to an aspect of the present disclosure includes a first acquisition unit, a second acquisition unit, and a notification processing unit. The first acquisition unit acquires disaster presence information about presence of any disaster detected by a disaster detector. The disaster detector detects the presence of the disaster in a facility. The second acquisition unit acquires state information indicating a state concerned with a space where the disaster detector is provided. The notification processing unit provides first alarm information that alerts a person to detection of the presence of the disaster by the disaster detector when the disaster presence information acquired by the first acquisition unit indicates that the presence of the disaster has been detected and the state information acquired by the second acquisition unit satisfies a first decision condition. The notification processing unit provides second alarm information that alerts the person to the detection of the presence of the disaster by the disaster detector when the disaster presence information acquired by the first acquisition unit indicates that the presence of the disaster has been detected and the state information acquired by the second acquisition unit satisfies a second decision condition different from the first decision condition. The notification processing unit provides, when transmitting each of the first alarm information and the second alarm information, the state information such that at least the state information is included in the first or second alarm information being provided, and/or changes a mode of display of the first alarm information and a mode of notification of the second alarm information.

A program according to another aspect of the present disclosure is designed to cause a computer to function as the control system described above.

A control method according to still another aspect of the present disclosure includes a first acquisition step, a second acquisition step, and a notification processing step. The first acquisition step includes acquiring disaster presence information about presence of any disaster detected by a disaster detector. The disaster detector detects the presence of the disaster in a facility. The second acquisition step includes acquiring state information indicating a state concerned with a space where the disaster detector is provided. The notification processing step includes providing first alarm information that alerts a person to detection of the presence of the disaster by the disaster detector when the disaster presence information acquired in the first acquisition step indicates that the presence of the disaster has been detected and the state information acquired in the second acquisition step satisfies a first decision condition. The notification processing step further includes providing second alarm information that alerts the person to the detection of the presence of the disaster by the disaster detector when the disaster presence information acquired in the first acquisition step indicates that the presence of the disaster has been detected and the state information acquired in the second acquisition step satisfies a second decision condition different from the first decision condition. The notification processing step includes, when transmitting each of the first alarm information and the second alarm information, providing the state information such that at least the state information is included in the first or second alarm information being provided, and/or changing a mode of display of the first alarm information and a mode of notification of the second alarm information.

### Brief Description of Drawings

FIG. 1 illustrates a configuration for a control system and alarm system according to an aspect of the present disclosure;
FIG. 2 illustrates an exemplary application of the control system and alarm system;
FIG. 3 illustrates a configuration for an alarm device serving as a master device included in the alarm system;
FIG. 4 illustrates a configuration for an alarm device serving as a slave device included in the alarm system;
FIG. 5A shows a first alarm screen image displayed by a telecommunications device as a destination device for the control system;
FIG. 5B shows a second alarm screen image displayed by the telecommunications device as the destination device for the control system; and
FIG. 6 shows how the alarm system operates when the presence of a disaster has been detected.

### Description of Embodiments

Note that the embodiment and its variations to be described below are only examples of the present disclosure and should not be construed as limiting. Rather, the exemplary embodiment and variations may be readily modified in various manners depending on a design choice or any other factor without departing from the scope of the present disclosure.

### (Embodiment)

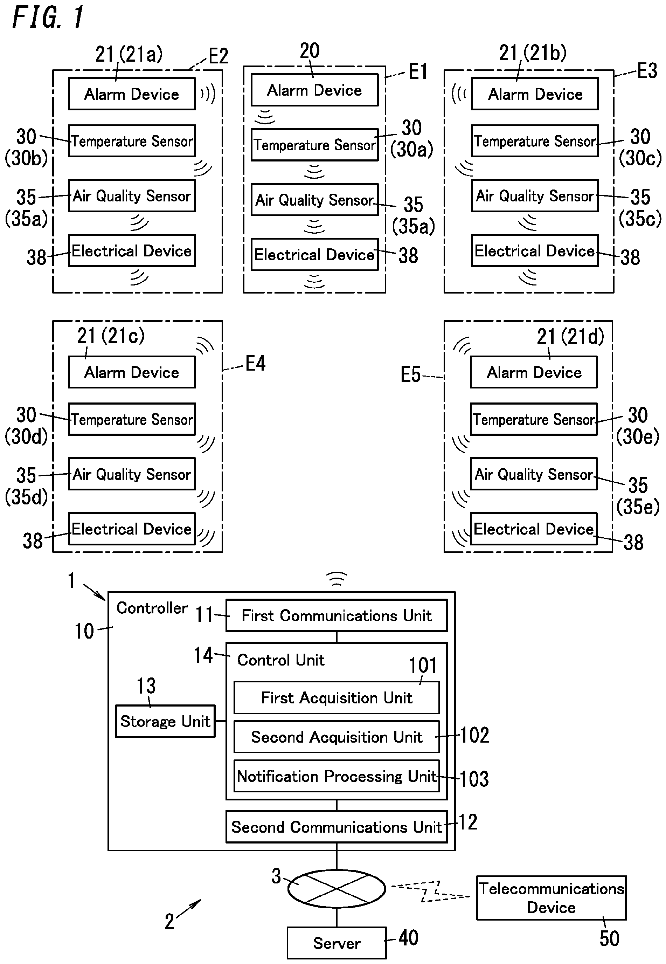

Next, a controller 10 as an exemplary control system 1 according to an embodiment and an alarm system 2 including the controller 10 will be described with reference to FIGS. 1-6.

### (1) Overview

An alarm system 2 according to an exemplary embodiment includes: a controller 10 functioning as a control system 1 according to the exemplary embodiment; a plurality of (e.g., five in this embodiment) alarm devices 20, 21; a plurality of (e.g., five in this embodiment) temperature sensors 30; and a plurality of (e.g., five in this embodiment) air quality sensors 35.

The controller 10 functioning as the control system 1 according to this embodiment is ready to communicate with the plurality of alarm devices (such as residential alarm devices) 20, 21 and the plurality of temperature sensors 30. In the following description, when the plurality of (e.g., four in this embodiment) alarm devices 21 need to be distinguished from each other, the alarm devices 21 will be hereinafter referred to as alarm devices 21a, 21b, 21c, 21d. Likewise, when the plurality of temperature sensors 30 need to be distinguished from each other, the temperature sensors 30 will be hereinafter referred to as temperature sensors 30a, 30b, 30c, 30d, 30e. When the plurality of air quality sensors 35 need to be distinguished from each other, the air quality sensors 35 will be hereinafter referred to as air quality sensors 35a, 35b, 35c, 35d, 35e.

Each of the plurality of alarm devices 20, 21 has a detection capability of detecting the presence of a disaster in the facility 5 and an alarm capability of calling an alert when detecting the presence of a disaster in the facility 5. Each alarm device 20, 21 performs an operation of calling an alert about the presence of the disaster. In this case, each of the alarm devices 20, 21 detects, as the disaster, at least one of a fire, an inundation, or an earthquake, for example. In this embodiment, the plurality of alarm devices 20, 21 perform the operation of calling an alert about the presence of a fire. That is to say, the alarm devices 20, 21 emit a sound such as an alarm sound when detecting the presence of a fire. Nevertheless, the type of the disaster that calls for sounding the alarm devices 20, 21 does not have to be a fire but may also be, for example, leakage of a gas or the presence of carbon monoxide (CO) due to incomplete combustion.

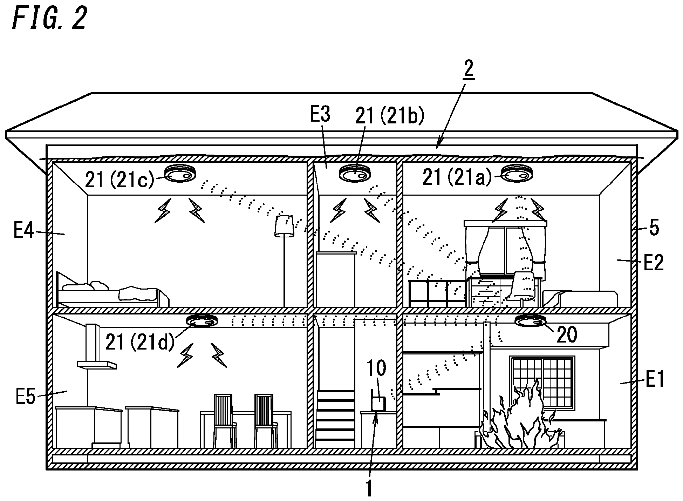

The plurality of alarm devices 20, 21 are installed in mutually different spaces in the facility 5. Specifically, the plurality of alarm devices 20, 21 are installed on the ceiling or walls, for example, in the installation space. In this embodiment, the plurality of alarm devices 20, 21 are respectively installed in spaces E1-E5 inside the facility 5 as shown in FIG. 2. Specifically, the alarm devices 20, 21a, 21b, 21c, and 21d are installed in spaces E1, E2, E3, E4, and E5, respectively (see FIGS. 1 and 2).

In this embodiment, the facility 5 is supposed to be a single-family dwelling house, for example. However, this is only an example of the present disclosure and should not be construed as limiting. The facility 5 may also be a multi-family dwelling house (condominium) (i.e., what is called a "mansion" in Japan). Alternatively, the facility 5 may also be a non-residential facility. Examples of such non-residential facilities include office buildings, theaters, movie theaters, public halls, amusement facilities, complex facilities, restaurants, department stores, schools, hotels, inns, hospitals, nursing homes for the elderly, kindergartens, libraries, museums, art museums, underground shopping malls, railway stations, and airports.

Furthermore, in this embodiment, a communications network is established between the plurality of alarm devices 20, 21. In this embodiment, communication may be established between the alarm device 20 functioning as a master device and the plurality of alarm devices 21 functioning as slave devices.

The plurality of alarm devices 20, 21 are so-called "synchronous disaster prevention devices" and are configured such that no matter which of the plurality of alarm devices 20, 21 detects the presence of a fire, the device 20, 21 emits an alarm sound in synch with (i.e., along with) the other alarm devices 20, 21. The alarm device located at the origin of the fire (i.e., triggering device) may emit an alarm sound such as "woop woop, fire!" Meanwhile, the other alarm devices (i.e., triggered devices) emit an alarm sound that allows the user to locate the origin of the fire.

For example, when the alarm device 21a serving as a slave device detects a fire, the alarm device 21a transmits, to the alarm device 20 serving as a master device, information indicating that the presence of a fire has been detected in the facility 5 as disaster presence information about the presence of the fire in the facility 5. On receiving the result of detection, the alarm device 20 emits an alarm sound and transmits an instruction to sound an alarm to the other slave devices (i.e., the alarm devices 21b-21d). Furthermore, the alarm device 20 transmits the result of detection by the alarm device 21a to the controller 10. The alarm devices 21 (alarm devices 21b-21d) that have received the instruction to sound an alarm from the alarm device 20 each emit an alarm sound. In this case, the disaster presence information includes an identifier assigned to the alarm device as the source device (alarm device identifier).

Meanwhile, when the alarm device 20 detects a fire, the alarm device 20 emits an alarm sound and transmits an instruction to sound an alarm to the slave devices (alarm devices 21a-21d). Furthermore, the alarm device 20 transmits the result of detection by the alarm device 20 itself to the controller 10. The alarm devices 21 (alarm devices 21a-21d) that have received the instruction to sound an alarm from the alarm device 20 each emit an alarm sound.

The plurality of temperature sensors 30 are respectively provided for the plurality of spaces E1-E5 equipped with the plurality of alarm devices 20, 21. In this embodiment, the temperature sensors 30a, 30b, 30c, 30d, and 30e are provided for the spaces E1, E2, E3, E4, and E5, respectively (see FIG. 1).

The temperature sensors 30 each measure the temperature in an associated space (region) in the facility 5. Each temperature sensor 30 measures the temperature in the space where the temperature sensor 30 is installed.

The plurality of air quality sensors 35 are respectively provided for the plurality of spaces E1-E5 equipped with the plurality of alarm devices 20, 21. In this embodiment, the air quality sensors 35a, 35b, 35c, 35d, and 35e are provided for the spaces E1, E2, E3, E4, and E5, respectively (see FIG. 1).

Each of the air quality sensors 35 measures the air quality in an associated space (region) in the facility 5. Specifically, each air quality sensor 35 measures the air quality of the space where the air quality sensor 35 is installed. For example, each air quality sensor 35 measures the quantity of odor and house dust in the target space for measurement to obtain, as a result of detection, a pollution level of the air (air quality level) based on the quantity of the odor and house dust thus measured.

The controller 10 is configured to communicate wirelessly with the alarm device 20 and the respective temperature sensors 30. Wireless communication is established, using a radio wave falling within the 920 MHz band, between the controller 10, the alarm device 20, and the respective temperature sensors 30. In addition, communication may also be established between the alarm device 20 and the respective alarm devices 21 as described above. In this embodiment, wireless communication is established, using a radio wave falling within the 420 MHz band, between the alarm device 20 and the respective alarm devices 21. This allows the controller 10 to communicate with the respective alarm devices 21 via the alarm device 20. Note that the frequency band for use in communication between the controller 10, the alarm device 20, and the respective temperature sensors 30 does not have to be the 920 MHz band but may also be changed as appropriate in accordance with applicable regulations of the Radio Act or Fire Service Act defined in any of various countries. Likewise, the frequency band for use in communication between the alarm device 20 and the respective alarm devices 21 does not have to be the 420 MHz band but may also be changed as appropriate in accordance with applicable regulations of the Radio Act or Fire Service Act defined in any of various countries.

On acquiring, as the disaster presence information from either the alarm device 20 or the alarm device 21, information indicating that the presence of a fire has been detected in the facility 5, the controller 10 acquires a result of measurement by a temperature sensor 30 (first state information) and a result of measurement by an air quality sensor 35 (second state information). Specifically, on receiving the result of detection from at least one of the plurality of alarm devices 20, 21, the controller 10 acquires first state information as a result of measurement made by the temperature sensor 30 installed in the same space as the source alarm device that has transmitted the result of detection and second state information as a result of the air quality measurement made by the air quality sensor 35 installed in that space. In this case, the first state information includes information about the temperature detected by the temperature sensor 30. The second state information includes information about the level of the air quality (air quality level) detected by the air quality sensor 35.

The controller 10 determines, based on the first state information and second state information acquired, the credibility of the information about the presence of a fire detected.

The controller 10 transmits, to the server 40, alarm information depending on the decision and information (such as a phone number) about a telecommunications device that is the destination of the alarm information over the network 3. The information about the telecommunications device will be hereinafter referred to as "destination information." On receiving the alarm information and the destination information from the controller 10, the server 40 transmits the alarm information to the telecommunications device 50 based on the destination information. In other words, the controller 10 provides the telecommunications device 50 with the alarm information via the server 40. If a decision is made that the credibility of information about the presence of the fire detected, for example, should be low, then the controller 10 transmits, as the alarm information depending on the decision, first alarm information indicating that the information is highly likely to be incorrect. On the other hand, if a decision is made that the credibility of information about the presence of the fire detected, for example, should be high, then the controller 10 transmits, as the alarm information depending on the decision, second alarm information indicating that the information is much less likely to be incorrect. The first alarm information and the second alarm information include, for example, pieces of information about mutually different modes of display. In this case, the telecommunications device 50 may be, for example, a smartphone, a tablet computer, or any other device that the user of the facility 5 (such as a resident) owns. In this embodiment, the telecommunications device 50 is supposed to be a smartphone.

The telecommunications device 50 acquires the alarm information over the network 3. The telecommunications device 50 displays, based on the alarm information, a message indicating that the presence of a fire has been detected in at least the facility 5. In this case, the first alarm information and the second alarm information include information about mutually different modes of display as described above. Thus, the telecommunications device 50 displays these messages in mutually different modes of display when the message is displayed in accordance with the first alarm information and when the message is displayed in accordance with the second alarm information.

### (2) Configuration

### (2-1) Controller

The controller 10 may be a home energy management system (HEMS) controller, for example, and is ready to communicate with a plurality of devices provided in the facility 5. The plurality of devices include the temperature sensors 30 and air quality sensors 35 described above. In this embodiment, the controller 10 is also ready to communicate with the plurality of alarm devices 20, 21 provided in the facility 5. In addition, the controller 10 is also ready to communicate with electrical devices 38 (see FIG. 1) provided in the facility 5.

As shown in FIG. 1, the controller 10 includes a first communications unit 11, a second communications unit 12, a storage unit 13, and a control unit 14.

The controller 10 includes a computer system including a processor and a memory, for example. The computer system performs the function of the control unit 14 by making the processor execute a program stored in the memory. In this embodiment, the program to be executed by the processor is stored in advance in the memory of the computer system. However, this is only an example and should not be construed as limiting. The program may also be distributed after having been stored in a non-transitory storage medium such as a memory card or downloaded via a telecommunications line such as the Internet.

The first communications unit 11 includes a communications interface for use to communicate with the alarm device 20, the respective temperature sensors 30, the respective air quality sensors 35, and the respective electrical devices 38. The first communications unit 11 receives the result of detection by the alarm device 20 and the results of detection by the respective alarm devices 21 from the alarm device 20 via wireless communication that uses a radio wave falling within the 920 MHz band. In addition, the first communications unit 11 receives the first state information as the results of measurement made by the temperature sensors 30 and the second state information as the results of measurement made by the air quality sensors 35 via wireless communication that uses a radio wave falling within the 920 MHz band. Furthermore, the first communications unit 11 receives information about the electrical devices via wireless communication that uses a radio wave falling within the 920 MHz band.

The second communications unit 12 includes a communications interface for communicating with the server 40 over a network 3 such as the Internet.

The storage unit 13 is implemented as a device selected from the group consisting of a read-only memory (ROM), a random-access memory (RAM), an electrically erasable programmable read-only memory (EEPROM), and other storage devices.

The storage unit 13 stores the respective alarm device identifiers of the plurality of alarm devices 20, 21, the respective temperature sensor identifiers of the plurality of temperature sensors 30, and the respective air quality sensor identifiers of the plurality of air quality sensors 35. Specifically, the storage unit 13 stores the alarm device identifiers of the alarm devices 20 (or 21) provided for the spaces E1-E5, the temperature sensor identifiers of the temperature sensors 30 provided for the spaces E1-E5, and the air quality sensor identifiers of the air quality sensors 35 provided for the spaces E1-E5 in association with each other. For example, the storage unit 13 may store the alarm device identifier of the alarm device 20, the temperature sensor identifier of the temperature sensor 30a, and the air quality sensor identifier of the air quality sensor 35a in association with each other with respect to the space E1. The storage unit 13 may store the alarm device identifier of the alarm device 21a, the temperature sensor identifier of the temperature sensor 30b, and the air quality sensor identifier of the air quality sensor 35b in association with each other with respect to the space E2. The storage unit 13 may store the alarm device identifier of the alarm device 21b, the temperature sensor identifier of the temperature sensor 30c, and the air quality sensor identifier of the air quality sensor 35c in association with each other with respect to the space E3. The storage unit 13 may store the alarm device identifier of the alarm device 21c, the temperature sensor identifier of the temperature sensor 30d, and the air quality sensor identifier of the air quality sensor 35d in association with each other with respect to the space E4. The storage unit 13 may store the alarm device identifier of the alarm device 21d, the temperature sensor identifier of the temperature sensor 30e, and the air quality sensor identifier of the air quality sensor 35e in association with each other with respect to the space E5. In this case, the alarm device identifier may be a device unique ID, which is a combination of the model number and manufacturing serial number of its associated alarm device 20 (or 21), or a Mac address thereof, for example. The temperature sensor identifier may be a device unique ID, which is a combination of the model number and manufacturing serial number of its associated temperature sensor 30, or a Mac address thereof, for example. The air quality sensor identifier may be a device unique ID, which is a combination of the model number and manufacturing serial number of its associated air quality sensor 35, or a Mac address thereof, for example.

As shown in FIG. 1, the control unit 14 includes a first acquisition unit 101, a second acquisition unit 102, and a notification processing unit 103.

The first acquisition unit 101 acquires disaster presence information from the alarm device 20 (or 21). Specifically, when the alarm device 20 detects the presence of a fire, the first acquisition unit 101 acquires the disaster presence information from the alarm device 20 via the first communications unit 11. When the alarm device 21 detects the presence of a fire, the first acquisition unit 101 acquires, as the disaster presence information, information indicating that the presence of a fire has been detected in the facility 5 from the alarm device 20 via the first communications unit 11.

When the first acquisition unit 101 acquires, as the disaster presence information, the information indicating that the presence of a disaster has been detected, the second acquisition unit 102 acquires first state information of a temperature sensor 30 from the temperature sensor 30 and also acquires second state information of an air quality sensor 35 from the air quality sensor 35.

For example, if the alarm device 20 has detected the presence of a fire, the second acquisition unit 102 acquires, via the first communications unit 11, the first state information of the temperature sensor 30a provided in the space E1 where the alarm device 20 as the source of the disaster presence information is provided and the second state information of the air quality sensor 35a provided in the space E1. On the other hand, if an alarm device 21 (such as the alarm device 21a) has detected the presence of a fire, the second acquisition unit 102 acquires, via the first communications unit 11, the first state information of a temperature sensor 30 (e.g., the temperature sensor 30b) provided in the space (e.g., the space E2) where the alarm device 21 as the source of the result of detection is provided and the second state information of the air quality sensor 35b provided in the space E2.

Specifically, the second acquisition unit 102 acquires, from the storage unit 13, a temperature sensor identifier and an air quality sensor identifier associated with an alarm device identifier corresponding with the alarm device identifier included in the disaster presence information that the first acquisition unit 101 has acquired which counts among a plurality of alarm device identifiers stored in the storage unit 13. The second acquisition unit 102 transmits, via the first communications unit 11, first request information requesting the first state information to the temperature sensor 30 having the temperature sensor identifier acquired. The second acquisition unit 102 also acquires, via the first communications unit 11, the first state information from the temperature sensor 30 that has received the first request information. In addition, the second acquisition unit 102 transmits, via the first communications unit 11, second request information requesting the second state information to the air quality sensor 35 having the air quality sensor identifier acquired. The second acquisition unit 102 also acquires, via the first communications unit 11, the second state information from the air quality sensor 35 that has received the second request information.

The notification processing unit 103 determines, by the alarm device identifier included in the disaster presence information that the first acquisition unit 101 has acquired, in which of the spaces E1-E5 the presence of a fire has been detected. Specifically, the notification processing unit 103 determines the space associated with one alarm device identifier, matching the alarm device identifier included in the disaster presence information, out of the plurality of alarm device identifiers stored in the storage unit 13. For example, if the alarm device identifier included in the disaster presence information is an identifier assigned to the alarm device 20, then the notification processing unit 103 determines the space where the presence of a fire has been detected to be the space E1.

The notification processing unit 103 determines, based on the first state information and second state information acquired, the credibility of the information about the presence of a fire detected by the alarm device 20 (or 21).

The notification processing unit 103 determines whether or not the temperature included in the first state information is lower than a first reference temperature, which is a predetermined first temperature decision condition (first decision condition). That is to say, the notification processing unit 103 determines whether or not the temperature included in the first state information is lower than the first reference temperature.

The notification processing unit 103 determines whether or not the air quality level included in the second state information is lower than a first reference level, which is a predetermined first air quality decision condition (first decision condition). That is to say, the notification processing unit 103 determines whether or not the air quality level included in the second state information is lower than the first reference level.

When finding both the first temperature decision condition and the first air quality decision condition satisfied, the notification processing unit 103 transmits first alarm information, indicating that the information is probably incorrect, to the telecommunications device 50 via the server 40. Specifically, the notification processing unit 103 transmits first alarm information, including a message that the presence of a fire has been detected, the location where the fire has been detected, the first state information, the second state information, and a background color of the message (first background color), to the telecommunications device 50 via the server 40.

In addition, the notification processing unit 103 determines whether or not the temperature included in the first state information is equal to or higher than a second reference temperature, which is a predetermined second temperature decision condition (second decision condition). That is to say, the notification processing unit 103 determines whether or not the temperature included in the first state information is equal to or higher than the second reference temperature. In this case, the second reference temperature is equal to or higher than the first reference temperature. In this embodiment, the first reference temperature and the second reference temperature are the same temperature. That is to say, if the temperature included in the first state information does not satisfy the first temperature decision condition, then the temperature should satisfy the second temperature decision condition.

The notification processing unit 103 determines whether or not the air quality level included in the second state information is equal to or higher than a second reference level, which is a predetermined second air quality decision condition (second decision condition). That is to say, the notification processing unit 103 determines whether or not the air quality level included in the second state information is lower than the second reference level. In this case, the second reference level is equal to or higher than the first reference level. In this embodiment, the first reference level and the second reference level are the same level. That is to say, if the air quality level included in the second state information does not satisfy the first air quality decision condition, then the air quality level should satisfy the second air quality decision condition.

When finding at least one of the second temperature decision condition and the second air quality decision condition satisfied, the notification processing unit 103 transmits second alarm information, indicating that the information is probably correct (i.e., indicating that the information about the fire detection is highly credible), to the telecommunications device 50 via the server 40. Specifically, the notification processing unit 103 transmits second alarm information, including a message that the presence of a fire has been detected, the location where the fire has been detected, the first state information, the second state information, and a second background color (which is different from the first background color), to the telecommunications device 50 via the server 40.

The notification processing unit 103 makes the first background color included in the first alarm information and the second background color included in the second alarm information different from each other. In other words, the notification processing unit 103 changes the mode of notification (mode of display) depending on the decision made about the credibility of information about fire detection.

### (2-2) Alarm device (master device)

Next, a configuration for the alarm device 20 serving as a master device will be described.

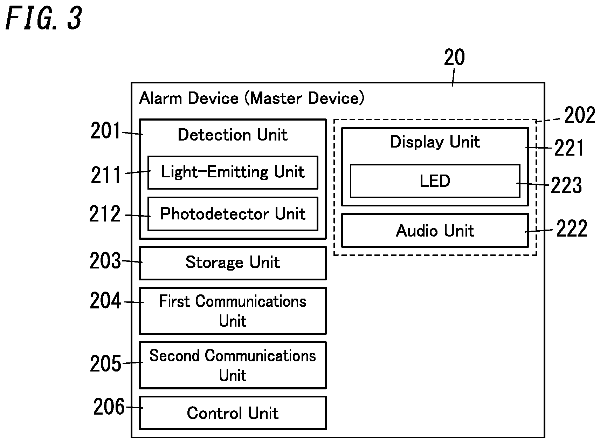

The alarm device 20 has a detection capability of detecting the presence of a disaster (e.g., a fire in this example) in the facility 5 and an alarm capability of alerting the user to the presence of the disaster when detecting the presence of the disaster in the facility 5. As shown in FIG. 3, the alarm device 20 includes a detection unit 201, an alert unit 202, a storage unit 203, a first communications unit 204, a second communications unit 205, and a control unit 206. The alarm device 20 includes a battery (such as a lithium battery) and operates on the power supplied from the battery.

The alarm device 20 includes a computer system including a processor and a memory, for example. The computer system performs the function of the control unit 206 by making the processor execute a program stored in the memory. In this embodiment, the program to be executed by the processor is stored in advance in the memory of the computer system. However, this is only an example and should not be construed as limiting. The program may also be distributed after having been stored in a non-transitory storage medium such as a memory card or downloaded via a telecommunications line such as the Internet.

The detection unit 201 has the capability of detecting information about a fire, against which an alarm sound needs to be emitted (i.e., has the detection capability). In this embodiment, the detection unit 201 may be implemented as a photoelectric sensor for detecting smoke, for example. Therefore, the information includes information about smoke, for example. The detection unit 201 includes a light-emitting unit 211 such as a light-emitting diode (LED) and a photodetector unit 212 such as a photodiode, for example. The light-emitting unit 211 and the photodetector unit 212 are arranged in the labyrinth of the housing of its own device such that the photosensitive plane of the photodetector unit 212 is off the optical axis of the light emitted from the light-emitting unit 211. In the presence of a fire, smoke may flow into the labyrinth through holes provided through the housing.

If there is no smoke in the labyrinth of the housing, then the light emitted from the light-emitting unit 211 hardly reaches the photosensitive plane of the photodetector unit 212. On the other hand, if there is any smoke in the labyrinth of the housing, then the light emitted from the light-emitting unit 211 is scattered by the smoke, thus causing some of the scattered light to impinge on the photosensitive plane of the photodetector unit 212. That is to say, the detection unit 201 makes the photodetector unit 212 receive the light emitted from the light-emitting unit 211 which has been scattered by the smoke.

The detection unit 201 outputs an electrical signal (detection signal), representing a voltage level corresponding to the quantity of light received at the photodetector unit 212, to the control unit 206.

The alert unit 202 includes a display unit 221 and an audio unit 222. The alert unit 202 has the capability of alerting, when the presence of a disaster is detected in the facility 5, the user to the presence of the fire (i.e., an alert capability). In this embodiment, the alert unit 202 alerts the user with light and sound.

The audio unit 222 has the capability of alerting the user to the presence of a fire. The audio unit 222 emits a sound (i.e., an acoustic wave). When the control unit 206 decides that a fire should be present, the audio unit 222 emits an alarm sound to alert the user to the presence of the fire.

The audio unit 222 may be implemented as a loudspeaker that transduces an electrical signal into a sound. The loudspeaker includes a diaphragm and emits an alarm sound by mechanically vibrating the diaphragm in accordance with the electrical signal. The audio unit 222 emits an alarm sound (such as a beep) under the control of the control unit 206. The audio unit 222 suitably emits an alarm sound, of which the loudness (i.e., the sound pressure level) is variable. For example, the alarm sound may include a sweep sound that is swept from a low-frequency sound to a high-frequency sound. The alarm sound may be accompanied by, for example, a verbal warning message such as "Fire! Fire!" Also, the alarm sound may be made up of the sweep sound and the verbal warning message continuous with the sweep sound.

When the alarm device 20 receives an operating command externally entered while activated (i.e., while the alarm sound is being emitted), the audio unit 222 stops emitting the alarm sound.

The display unit 221 has the capability of alerting the user to the presence of the fire. The display unit 221 includes a red light-emitting diode (LED) 223 as a light source. The display unit 221 is OFF normally (i.e., while monitoring for any fire) and starts flickering (or lighting) when the control unit 206 decides that a fire should be present. Such flickering as an alert to the presence of a fire will be hereinafter sometimes referred to as "indicating flickering." When the alarm sound stops being emitted, that indicating flickering is stopped under the control of the control unit 206.

The storage unit 203 is implemented as a device selected from the group consisting of a ROM, a RAM, an EEPROM, and other storage devices. The storage unit 203 stores alarm message data about the verbal warning messages to be emitted as a part of the alarm sound. In addition, the storage unit 203 also stores transmission message data to be transmitted to the telecommunications device as notification information. Furthermore, the storage unit 203 stores an alarm device identifier assigned to itself (its own device).

The first communications unit 204 includes a communications interface for communicating wirelessly with the alarm devices 21 as slave devices. For example, the first communications unit 204 may communicate wirelessly with the alarm devices 21 by using a radio wave falling within the 420 MHz band. The first communications unit 204 receives results of detection by the alarm devices 21. Furthermore, on receiving a result of detection from one alarm device 21 (such as the alarm device 21a), the first communications unit 204 transmits an instruction to sound an alarm to the other alarm devices 21 (i.e., the alarm devices 21b-21d).

The second communications unit 205 includes a communications interface for communicating wirelessly with the controller 10. For example, the second communications unit 205 may communicate wirelessly with the controller 10 by using a radio wave falling within the 920 MHz band. If its own device has detected a fire, the second communications unit 205 transmits a result of detection by its own device to the controller 10. If the first communications unit 204 has received a result of detection by one of the alarm devices 21, then the second communications unit 205 transmits the result of detection by the alarm device 21 to the controller 10.

The control unit 206 determines, based on the detection signal provided by the detection unit 201, whether or not a fire is present. For example, when finding the voltage level of the detection signal equal to or greater than a predetermined threshold value, the control unit 206 may decide that a fire should be present.

When deciding that a fire should be present, the control unit 206 makes the second communications unit 205 transmit disaster detection information, which is information indicating the presence of a disaster detected (in other words, information indicating that the presence of a fire has been detected in the facility 5 and including the alarm device identifier of its own device), to the controller 10. In addition, when deciding that a fire should be present, the control unit 206 makes the first communications unit 204 transmit an instruction to sound an alarm to the respective alarm devices 21 as slave devices.

When deciding that a fire should be present, the control unit 206 makes the audio unit 222 start emitting an alarm sound. For example, to make the audio unit 222 deliver a verbal warning message as the alarm sound, the control unit 206 generates, based on message data stored in the storage unit 203, an audio signal representing the verbal warning message. Then, the audio unit 222 delivers the verbal warning message (as a part of an alarm sound) based on the audio signal generated by the control unit 206.

Furthermore, when deciding that a fire should be present, the control unit 206 further controls the display unit 221 to make the display unit 221 flicker.

When acquiring the disaster presence information from any of the alarm devices 21 via the first communications unit 204, the control unit 206 has the disaster presence information provided by the alarm device 21 transmitted to the controller 10 via the second communications unit 205. In addition, the control unit 206 also has the instruction to sound an alarm transmitted to the other alarm devices 21, serving as slave devices, via the first communications unit 204.

On receiving, as a result of detection by the alarm device 21, information indicating that a fire has been detected in the facility 5, the control unit 206 makes the audio unit 222 start emitting an alarm sound and also controls the display unit 221 to make the display unit 221 flicker.

### (2-3) Alarm device (slave device)

Next, a configuration for the alarm devices 21 serving as slave devices will be described. In the following description, any constituent element of the alarm devices 21, having the same function as a counterpart of the alarm device 20 described above, will be designated by the same reference numeral as that counterpart's, and description thereof will be omitted herein.

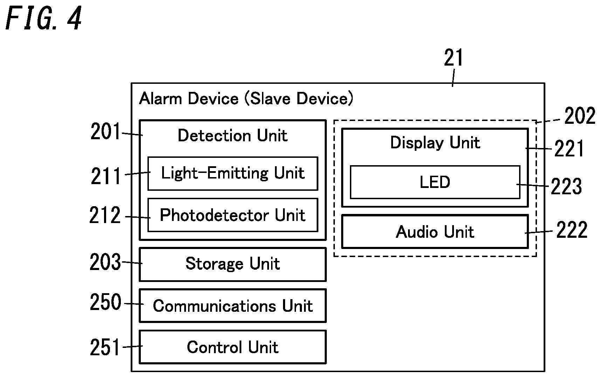

The alarm device 21, as well as the alarm device 20, has a detection capability of detecting the presence of a disaster (e.g., a fire in this example) in the facility 5 and an alarm capability of alerting the user to the presence of a disaster when detecting the presence of the disaster in the facility 5. As shown in FIG 4, the alarm device 21 includes a detection unit 201, an alert unit 202, a storage unit 203, a communications unit 250, and a control unit 251. The alarm device 21 includes a battery (such as a lithium battery) and operates on the power supplied from the battery.

The alarm devices 21 each include a computer system including a processor and a memory, for example. The computer system performs the function of the control unit 251 by making the processor execute a program stored in the memory. In this embodiment, the program to be executed by the processor is stored in advance in the memory of the computer system. However, this is only an example and should not be construed as limiting. The program may also be distributed after having been stored in a non-transitory storage medium such as a memory card or downloaded via a telecommunications line such as the Internet.

The communications unit 250 includes a communications interface for communicating wirelessly with the alarm device 20 serving as a master device. For example, the communications unit 250 may communicate wirelessly with the alarm device 20 by using a radio wave falling within the 420 MHz band. The communications unit 250 transmit a result of detection by the alarm device 21. In addition, the communications unit 250 also receives an instruction to sound an alarm from the alarm device 20.

The control unit 251 determines, based on the detection signal provided by the detection unit 201 of its own device, whether or not a fire is present. For example, when finding the voltage level of the detection signal equal to or greater than a predetermined threshold value, the control unit 251 may decide that a fire should be present.

When deciding that a fire should be present, the control unit 251 makes the communications unit 250 transmit disaster detection information, which is information indicating the presence of a disaster detected (in other words, information indicating that the presence of a fire has been detected in the facility 5 and including the alarm device identifier of its own device), to the alarm device 20.

When deciding that a fire should be present, the control unit 251 makes the audio unit 222 of its own device start emitting an alarm sound. For example, to make the audio unit 222 of its own device deliver a verbal warning message as the alarm sound, the control unit 251 generates, based on message data stored in the storage unit 203 of its own device, an audio signal representing the verbal warning message. Then, the audio unit 222 delivers the verbal warning message (as a part of an alarm sound) based on the audio signal generated by the control unit 251.

Furthermore, when deciding that a fire should be present, the control unit 251 further controls the display unit 221 of its own device to make the display unit 221 flicker.

On receiving the instruction to sound an alarm from the alarm device 20 via the communications unit 250, the control unit 251 makes the audio unit 222 of its own device start emitting an alarm sound and also controls the display unit 221 of its own device to make the display unit 221 flicker.

### (2-4) Temperature sensors and air quality sensors

First, the temperature sensors 30 will be described.

Each of the temperature sensors 30 may be, for example, a contact type temperature sensor to detect a temperature in the space where its own device is provided.

The temperature sensor 30 includes a communications interface for communicating wirelessly with the controller 10. Specifically, the temperature sensor 30 may communicate wirelessly with the controller 10 by using a radio wave falling within the 920 MHz band.

The temperature sensor 30 always measures the temperature and stores the result of measurement (i.e., the measured temperature). On receiving first request information from the controller 10, the temperature sensor 30 transmits, to the controller 10, first state information including information about the temperature measured at a point in time when the first request information was received.

Next, the air quality sensors 35 will be described.

Each of the air quality sensors 35 according to this embodiment measures the odor and the amount of house dust in the space as the target of measurement. The air quality sensor 35 is an air purifier including an odor sensor and a dust sensor (airborne particle counter) for measuring the amount of house dust.

The odor sensor may be implemented as a semiconductor sensor, a quartz oscillator sensor, or any other type of sensor. The odor sensor converts the odor (smell) detected into an odor level indicating the degree of odor and regards the odor level thus converted as a result of measurement.

The dust sensor obtains the count of airborne particles (including pollens, house dust, and smoke) and converts the airborne particle count into a concentration (representing an air pollution level). The dust sensor regards the concentration thus converted (representing the air pollution level) as a result of measurement.

The air quality sensor 35 includes a communications interface for communicating wirelessly with the controller 10. Specifically, the air quality sensor 35 may communicate wirelessly with the controller 10 by using a radio wave falling within the 920 MHz band.

The air quality sensor 35 always measures the odor and the house dust and stores the results of measurement (including the odor level and air pollution level thus measured). On receiving second request information from the controller 10, the air quality sensor 35 transmits, to the controller 10, second state information including one of the odor level or the air pollution level measured at the point in time of reception of the second request information which turned out to be higher than the other level.

In this embodiment, the air quality sensor 35 is configured to transmit the second state information including the higher one of the odor level or the air pollution level. However, this configuration is only an example and should not be construed as limiting. Alternatively, the air quality sensor 35 may transmit second state information including an average level between the odor level and the air pollution level. Still alternatively, the air quality sensor 35 may transmit the second state information including the lower one of the odor level or the air pollution level.

### (2-5) Server

The server 40 includes a computer system including a processor and a memory, for example. The computer system performs the function of the server 40 by making the processor execute a program stored in the memory. In this embodiment, the program to be executed by the processor is stored in advance in the memory of the computer system. However, this is only an example and should not be construed as limiting. The program may also be distributed after having been stored in a non-transitory storage medium such as a memory card or downloaded via a telecommunications line such as the Internet.

The server 40 is configured to be ready to communicate with the controller 10 and the telecommunications device 50. On receiving alarm information, which is either the first alarm information or the second alarm information, and the destination of the alarm information from the controller 10, the server 40 transmits the alarm information to the telecommunications device 50 as the destination.

### (2-6) Telecommunications device

The telecommunications device 50 includes a computer system including a processor and a memory, for example. The computer system performs the function of the telecommunications device 50 by making the processor execute a program stored in the memory. In this embodiment, the program to be executed by the processor is stored in advance in the memory of the computer system. However, this is only an example and should not be construed as limiting. The program may also be distributed after having been stored in a non-transitory storage medium such as a memory card or downloaded via a telecommunications line such as the Internet.

The telecommunications device 50 is configured to be ready to communicate with the server 40. The telecommunications device 50 receives, via the server 40, the alarm information provided by the controller 10 which is either the first alarm information or the second alarm information.

Based on information included in the alarm information thus received, the telecommunications device 50 displays, in a specified mode of display on a display unit of the telecommunications device 50, a message that the presence of a fire has been detected. In this embodiment, the display unit of the telecommunications device 50 has a touchscreen panel capability.

Next, some screen images displayed on the telecommunications device 50 will be described.

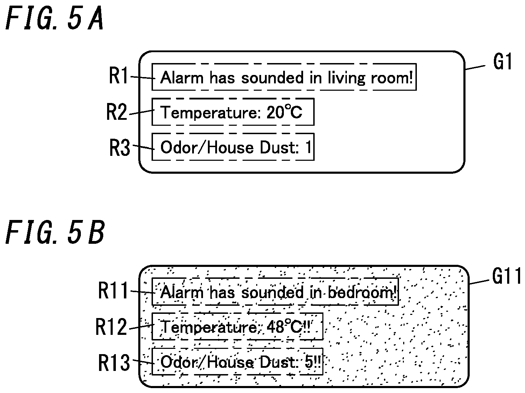

FIG. 5A illustrates an example of a first alarm screen image G1 in accordance with the first alarm information.

The first alarm screen image G1 includes a first display area R1, a second display area R2, and a third display area R3. On the first display area R1, displayed is a message indicating that the presence of a fire has been detected. In FIG. 5A, "alarm has sounded in living room!" is displayed as a message that the presence of a fire has been detected in the living room. On the second display area R2, a message indicating the temperature included in the first state information is displayed. On the third display area R3, a message indicating the air quality level included in the second state information is displayed. The background color of the first alarm screen image G1 is a color specified as the first background color (e.g., white).

FIG. 5B illustrates an example of a second alarm screen image G11 in accordance with the second alarm information.

The second alarm screen image G11 includes a first display area R11, a second display area R12, and a third display area R13. On the first display area R11, displayed is a message indicating that the presence of a fire has been detected. In FIG. 5B, "alarm has sounded in bedroom!" is displayed as a message that the presence of a fire has been detected in the bedroom. On the second display area R12, a message indicating the temperature included in the first state information is displayed. On the third display area R3, a message indicating the air quality level included in the second state information is displayed. The background color of the second alarm screen image G11 is a color specified as the second background color (e.g., red).

The user of the telecommunications device 50 is allowed to determine, by the background color of the alarm screen image displayed, the credibility of the information about the fire detection (i.e., whether the information is correct or incorrect).

In addition, since the first state information and the second state information are displayed, the user may also determine, based on the contents of the information displayed, the credibility of the information about the fire detection (i.e., whether the information is correct or incorrect). For example, if a fire is actually present, then the temperature in the place where the fire is present increases and the air pollution level also increases because a fire involves smoke. That is why if the result of measurement by the temperature sensor 30 in the space where the presence of the fire is detected indicates that the temperature is high in the space and the result of measurement by the air quality sensor 35 indicates that the air is heavily polluted there, then the user may decide that the information about the fire detection is highly credible. Conversely, if the result of measurement by the temperature sensor 30 in the space where the presence of the fire is detected indicates that the temperature is low in the space and the result of measurement by the air quality sensor 35 indicates that the air is not heavily polluted, then the user may decide that the information about the fire detection is hardly credible (i.e., probably incorrect).

### (3) Operation

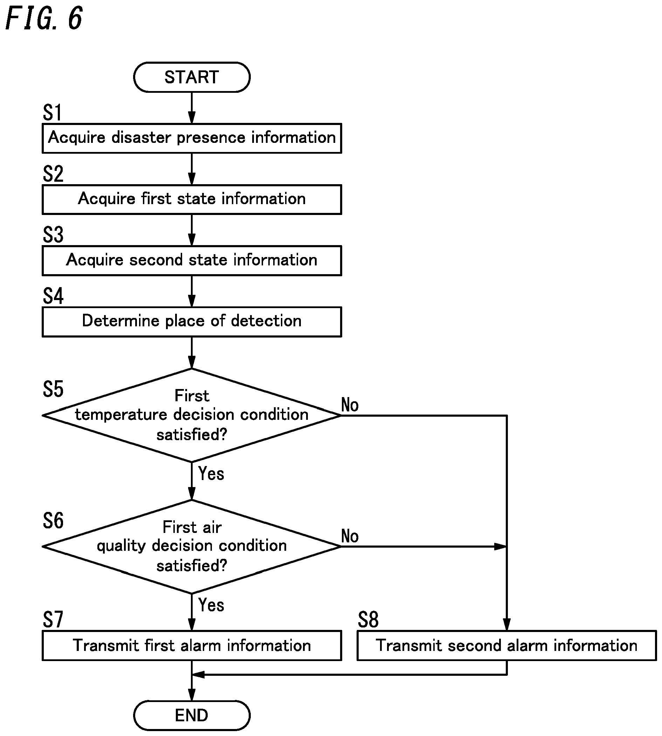

Next, it will be described with reference to FIG. 6 how the controller 10 operates when the presence of a fire is detected.

The first acquisition unit 101 of the controller 10 acquires disaster presence information from the alarm device 20 (or 21) (in Step S1).

The second acquisition unit 102 of the controller 10 acquires first state information from the temperature sensor 30 in the space where the alarm device 20 (or 21) as the source of the disaster presence information is provided (in Step S2).

The second acquisition unit 102 acquires second state information from the air quality sensor 35 in that space (in Step S3).

The notification processing unit 103 determines, by the alarm device identifier included in the disaster presence information, the space where the presence of the fire has been detected (place of detection) (in Step S4).

The notification processing unit 103 determines whether or not the first state information satisfies the first temperature decision condition (in Step S5). For example, the notification processing unit 103 determines whether or not the temperature included in the first state information is lower than the first reference temperature.

If the decision is made that the first state information should satisfy the first temperature decision condition (i.e., the temperature included in the first state information should be lower than the first reference temperature) (if the answer is YES in Step S5), then the notification processing unit 103 determines whether or not the second state information satisfies the first air quality decision condition (in Step S6). For example, the notification processing unit 103 determines whether or not the air quality level included in the first state information is lower than the first reference level.

If the decision is made that the second state information should satisfy the first air quality decision condition (i.e., the air quality included in the second state information should be lower than the first reference level) (if the answer is YES in Step S6), then the notification processing unit 103 transmits the first alarm information to the telecommunications device 50 via the server 40 (in Step S7).

On the other hand, if the decision is made that the first state information should not satisfy the first temperature decision condition (i.e., the temperature included in the first state information should be equal to or higher than the first reference temperature) (if the answer is NO in Step S5), then the notification processing unit 103 transmits the second alarm information to the telecommunications device 50 via the server 40 (in Step S8).

If the decision is made that the second state information should not satisfy the first air quality decision condition (i.e., the air quality level included in the second state information should be equal to or higher than the first reference level) (if the answer is NO in Step S6), then the notification processing unit 103 transmits the second alarm information to the telecommunications device 50 via the server 40 (in Step S8).

### (4) Advantages

As can be seen from the foregoing description, according to this embodiment, the notification processing unit 103 changes, depending on the decision made about the credibility of information about the fire detection, the background color of the alarm screen image displayed on the telecommunications device 50. This allows the user of the telecommunications device 50 to determine, by the background color of the alarm screen image displayed, the credibility of information about the fire detection (i.e., whether the alarm information is correct or incorrect).

In addition, since the first state information and the second state information are displayed, the user may also determine, based on the contents of the information displayed, the credibility of the information about the fire detection (i.e., whether the alarm information is correct or incorrect). For example, if a fire is actually present, then the temperature in the place where the fire is present increases and the air pollution level also increases because a fire involves smoke. That is why if a result of measurement by the temperature sensor 30 in the space where the presence of the fire is detected indicates that the temperature is high in the space and a result of measurement by the air quality sensor 35 indicates that the air is heavily polluted there, then the user may decide that the information about the fire detection is highly credible. Conversely, if the result of measurement by the temperature sensor 30 in the space where the presence of the fire is detected indicates that the temperature is low in the space and the result of measurement by the air quality sensor 35 indicates that the air is not heavily polluted, then the user may decide that the information about the fire detection is hardly credible (i.e., probably incorrect).

That is to say, using the control system 1 according to this embodiment allows a resident of the facility 5 to learn that the presence of a fire has been detected and how credible information about the fire detection is.

### (5) Variations

Note that the embodiment described above is only an exemplary one of various embodiments of the present disclosure and should not be construed as limiting. Rather, the exemplary embodiment may be readily modified in various manners depending on a design choice or any other factor without departing from the scope of the present disclosure. Next, variations of the exemplary embodiment will be enumerated one after another. Optionally, any of the variations to be described below may be adopted in combination with the exemplary embodiment as appropriate.

### (5-1) First variation

In the embodiment described above, the first alarm information includes the first state information, the second state information and the first background color, and the second alarm information includes the first state information, the second state information, and the second background color. However, this configuration is only an example and should not be construed as limiting.

Alternatively, each of the first alarm information and the second alarm information may include neither the first state information nor the second state information. Alternatively, the first alarm information does not have to include the first background color and the second alarm information does not have to include the second background color. That is to say, the first alarm information may include the first state information and second state information and/or the background color. The second alarm information may include the first state information and second state information and/or the background color.

In other words, the notification processing unit 103 may be configured to, when transmitting the first alarm information and the second alarm information, provide the alarm information including the first state information and the second state information and/or change the mode of display of the first alarm information and the mode of notification of the second alarm information.

### (5-2) Second variation

In the embodiment described above, the first alarm information and the second alarm information are each supposed to include both the first state information and the second state information. However, this configuration is only an example and should not be construed as limiting. Alternatively, each of the first state information and the second state information may also include either the first state information or the second state information.

That is to say, the alarm system 2 does not have include the plurality of temperature sensors 30 and the plurality of air quality sensors 35. Alternatively, the alarm system 2 may also be configured to include either the plurality of temperature sensors 30 or the plurality of air quality sensors 35.

### (5-3) Third variation

In the embodiment described above, the controller 10 is configured to determine, based on the results of measurement by the temperature sensor 30 and air quality sensor 35 provided in the space where the presence of a fire has been detected, the credibility of information about the fire detection. However, this configuration is only an example and should not be construed as limiting.

Alternatively, the controller 10 may also determine, by the operating or non-operating status of an electrical device 38 provided in the space where the presence of a fire has been detected, the credibility of information about the fire detection. In this case, the electrical device 38 may be, for example, an electric heater or an electric heating carpet, and is ready to communicate with the controller 10. In that case, the second acquisition unit 102 of the controller 10 acquires, from the electrical device 38 provided in the space where the presence of a fire has been detected, operating/non-operating status information indicating whether the electrical device 38 is operating or not. If the operating/non-operating status information indicates that the electrical device 38 is operating, then the notification processing unit 103 decides that the information about the fire detection should be highly credible. On the other hand, if the operating/non-operating status information indicates that the electrical device 38 is not operating, then the notification processing unit 103 decides that the information about the fire detection should be hardly credible.

Alternatively, the first alarm information and the second alarm information may include the operating/non-operating status information. In that case, when displaying the first alarm screen image G1 based on the first alarm information, the telecommunications device 50 may display the operating or non-operating status indicated by the operating/non-operating status information. For example, if the electrical device 38 is an electric heating carpet, then the telecommunications device 50 may display a message indicating that the electric heating carpet is not operating. When displaying the second alarm screen image G11 based on the second alarm information, the telecommunications device 50 may display the operating or non-operating status indicated by the operating/non-operating status information. For example, if the electrical device 38 is an electric heating carpet, then the telecommunications device 50 may display a message indicating that the electric heating carpet is operating.

Optionally, the notification processing unit 103 may determine, based on the operating or non-operating status of the electrical device 38 and at least one of the first state information or the second state information in combination, the credibility of information about the fire detection. For example, if the operating or non-operating status of the electrical device 38 and both of the first and second state information are combined, then the notification processing unit 103 transmits the first alarm information to the telecommunications device 50 only when the electrical device is not operating and the first temperature decision condition and the first air quality decision condition are both satisfied but transmits the second alarm information to the telecommunications device 50 otherwise.

### (5-4) Fourth variation

The first alarm information and second alarm information may include at least one of temperature history information indicating the progress of the results of measurement by the temperature sensor 30 (i.e., the transition of its states) or air quality history information indicating the progress of the results of measurement by the air quality sensor 35 (i.e., the transition of its states). In this variation, both the temperature history information and the air quality history information are supposed to be included in the first alarm information and the second alarm information.

The temperature sensor 30 provided in the space where the presence of a fire has been detected acquires a temperature group of a plurality of temperatures which were measured during a period of time of three minutes since a point in time when the first request information was received. The temperature sensor 30 transmits first state information, including the temperature measured at the point in time when the first request information was received (temperature at the time of detection) and the temperature group acquired, to the controller 10.

The air quality sensor 35 provided in the space where the presence of a fire has been detected acquires a level group of a plurality of air quality levels which were measured during a period of time of three minutes since a point in time when the second request information was received. The air quality sensor 35 transmits second state information, including the air quality level measured at the point in time when the second request information was received (level at the time of detection) and the level group acquired, to the controller 10.

The second acquisition unit 102 of the controller 10 acquires the first state information including the temperature at the time of detection and the temperature group from the temperature sensor 30 and also acquires the second state information including the level at the time of detection and the level group from the air quality sensor 35.

When transmitting the first alarm information, the notification processing unit 103 of the controller 10 transmits the first alarm information in which the first state information including the temperature at the time of detection and the temperature group and the second state information including the level at the time of detection and the level group are included. Likewise, when transmitting the second alarm information, the notification processing unit 103 transmits the second alarm information in which the first state information including the temperature at the time of detection and the temperature group and the second state information including the level at the time of detection and the level group are included.

On the first alarm screen image G1, not only the respective messages that have been described with reference to FIG. 5A but also the respective temperatures that form the temperature group included in the first state information and the respective air quality levels that form the level group included in the second state information may be displayed side by side time-sequentially. Alternatively, on the first alarm screen image G1, the respective temperatures that form the temperature group included in the first state information and the respective air quality levels that form the level group included in the second state information may be displayed as respective graphic representations.

Likewise, on the second alarm screen image G11, not only the respective messages that have been described with reference to FIG. 5B but also the respective temperatures that form the temperature group included in the first state information and the respective air quality levels that form the level group included in the second state information may be displayed side by side time-sequentially. Alternatively, on the second alarm screen image G11, the respective temperatures that form the temperature group included in the first state information and the respective air quality levels that form the level group included in the second state information may be displayed as respective graphic representations.

Still alternatively, the respective temperatures that form the temperature group included in the first state information and the respective air quality levels that form the level group included in the second state information may be displayed on another screen image different from the first alarm screen image G1 and the second screen image G11.

For example, when a predetermined operation (such as a touch operation) is performed on the second display area R2 where the temperature (i.e., the temperature at the time of detection) included in the first state information is displayed while the first alarm screen image G1 is being displayed, a screen image on which the respective temperatures that form the temperature group are arranged side by side may be displayed instead of the first alarm screen image G1. Alternatively, a screen image including a graphic representation of the respective temperatures that form the temperature group may be displayed.

When a predetermined operation (such as a touch operation) is performed on the third display area R3 where the air quality level (i.e., the level at the time of detection) included in the second state information is displayed while the first alarm screen image G1 is being displayed, a screen image on which the respective air quality levels that form the level group are arranged side by side time-sequentially may be displayed instead of the first alarm screen image G1. Alternatively, a screen image including a graphic representation of the respective air quality levels that form the level group may be displayed.

That is to say, the notification processing unit 103 may change, while the first alarm screen image G1 or the second alarm screen image G11 is being displayed on the telecommunications device 50, the screen images into the one including more specific information. In other words, the notification processing unit 103 may have the specific information displayed in a hierarchical form on the telecommunications device 50.

### (5-5) Fifth variation

The alarm device 20 (or 21) and the controller 10 may be implemented as an integrated device.

In that case, the control unit 206 also has the respective functions of the control unit 14 (namely, the first acquisition unit 101, the second acquisition unit 102, and the notification processing unit 103).

The first acquisition unit 101 of the control unit 206 acquires a detection signal provided by the detection unit 201 as disaster presence information about the presence of a fire detected in the facility 5. The notification processing unit 103 of the control unit 206 determines whether or not the detection signal acquired by the first acquisition unit 101 (i.e., the disaster presence information) indicates that the presence of a disaster has been detected. Specifically, when finding the voltage level represented by the detection signal equal to or greater than a predetermined threshold value, the notification processing unit 103 decides that the disaster presence information provided as the detection signal indicates that the presence of a disaster has been detected.

When deciding that the disaster presence information indicates that the presence of a disaster has been detected, the notification processing unit 103 instructs the second acquisition unit 102 to acquire the first state information and the second state information.

Then, based on the first state information and second state information that the second acquisition unit 102 has acquired, the notification processing unit 103 determines the credibility of the information about the fire detection. Thereafter, depending on the decision, the notification processing unit 103 transmits either the first alarm information or the second alarm information to the telecommunications device 50 via the server 40.

### (5-6) Sixth variation

In the embodiment described above, the controller 10 is configured to determine the information about the fire detection to be either highly credible or hardly credible. That is to say, the controller 10 is configured to choose one of only two credibility levels. However, this configuration is only an example and should not be construed as limiting.

Alternatively, the controller 10 may also determine which of multiple levels the credibility of information about the fire detection belongs. Specifically, the controller 10 may also determine which of three levels (i.e., Levels 1-3) the credibility of information about the fire detection belongs.

In that case, the controller 10 stores a first reference temperature and a second reference temperature, which are different from each other. In addition, the controller 10 also stores a first reference level and a second reference level, which are different from each other.

When finding the temperature included in the first state information lower than the first reference temperature and the air quality level included in the second state information lower than the first reference level, the notification processing unit 103 transmits the first alarm information to the telecommunications device 50. When finding the temperature included in the first state information equal to or higher than the first reference temperature but lower than the second reference temperature and the air quality level included in the second state information lower than the second reference level, the notification processing unit 103 transmits the second alarm information to the telecommunications device 50. Alternatively, when finding the temperature included in the first state information lower than the second reference temperature and the air quality level included in the second state information lower than the second reference level that is equal to or higher than the first reference level, the notification processing unit 103 transmits the second alarm information to the telecommunications device 50. Alternatively, when finding the temperature included in the first state information equal to or higher than the second reference temperature or the air quality level included in the second state information equal to or higher than the second reference level, the notification processing unit 103 transmits third alarm information to the telecommunications device 50. In this case, the third alarm information includes a third background color different from both of the first background color and the second background color, a message indicating that the presence of a fire has been detected, the place where the fire has been detected, the first state information, and the second state information.

### (Other variations)

In the embodiment described above, the alarm devices 20, 21 are each configured to have both the detection capability and the alert capability. However, this configuration is only an example and should not be construed as limiting. Alternatively, each of the alarm devices 20, 21 may also be configured to have only the detection capability.

Also, in the embodiment described above, the controller 10 is implemented as, for example, a HEMS controller. However, this configuration is only an example and should not be construed as limiting. The controller 10 may also be configured as any device as long as the controller 10 may be connected to the network 3.

Furthermore, in the embodiment described above, the alarm device 20 is used as a master device, the alarm devices 21 are used as slave devices, and each of the slave devices is configured to communicate with the controller via the master device. However, this configuration is only an example and should not be construed as limiting. Alternatively, each alarm device 21 may also be configured to communicate directly with the controller 10 via no other alarm devices (i.e., the alarm device 20).

Furthermore, in the embodiment described above, the alarm system 2 includes the plurality of alarm devices 20, 21. However, this configuration is only an example and should not be construed as limiting. Alternatively, the alarm system 2 may include only one alarm device which is ready to communicate with the controller 10. In short, the alarm system 2 has only to include at least one alarm device which is ready to communicate with the controller 10.

Optionally, the controller 10 described for the exemplary embodiment is also applicable to a multi-family dwelling house. In that case, the controller 10 is provided in each dwelling unit (corresponding to the facility 5) of the multi-family dwelling house. The controller 10 selectively transmits, depending on the decision, either the first alarm information or the second alarm information to not only the telecommunications device 50 via the server 40 but also a management system provided for the caretaker's room of the multi-family dwelling house.

Furthermore, in the embodiment described above, the alarm devices 21 may have the same configuration as the alarm device 20. In that case, when installing the alarm devices 20, 21, a person in charge of the installation, for example, may select one of the plurality of alarm devices 20, 21 as a master device and use the other alarm devices as slave devices.

Furthermore, in the embodiment described above, the first communications unit 11 may communicate with the alarm device 20, the respective temperature sensors 30, and the respective air quality sensors 35 via cables.

Furthermore, in the embodiment described above, the controller 10 is configured to communicate with the telecommunications device 50 via the server 40. However, this configuration is only an example and should not be construed as limiting. Alternatively, the controller 10 may communicate with the telecommunications device 50 not via the server 40.

Furthermore, in the embodiment described above, the controller 10 is configured to transmit the first alarm information when the first temperature decision condition and the first air quality decision condition are both satisfied. However, this configuration is only an example and should not be construed as limiting. Alternatively, the notification processing unit 103 of the controller 10 may transmit the first alarm information when at least one of the first temperature decision condition or the first air quality decision condition is satisfied. In that case, when neither the first temperature decision condition nor the first air quality decision condition is satisfied, the notification processing unit 103 transmits the second alarm information.

The functions of the control system 1 (controller 10) may also be implemented as a control method, a computer program, or a storage medium on which the computer program is stored, for example. A control method for controlling the control system 1 according to an aspect includes a first acquisition step, a second acquisition step, and a notification processing step. The first acquisition step includes acquiring disaster presence information about presence of any disaster detected by a disaster detector (such as the detection unit 201). The disaster detector detects the presence of the disaster in a facility 5. The second acquisition step includes acquiring state information indicating a state concerned with a space where the disaster detector is provided. The notification processing step includes providing first alarm information that alerts a person to detection of the presence of the disaster by the disaster detector when the disaster presence information acquired in the first acquisition step indicates that the presence of the disaster has been detected and the state information acquired in the second acquisition step satisfies a first decision condition. The notification processing step further includes providing second alarm information that alerts the person to the detection of the presence of the disaster by the disaster detector when the disaster presence information acquired in the first acquisition step indicates that the presence of the disaster has been detected and the state information acquired in the second acquisition step satisfies a second decision condition different from the first decision condition. The notification processing step includes, when transmitting each of the first alarm information and the second alarm information, providing the state information such that at least the state information is included in the first or second alarm information being provided, and/or changing a mode of display of the first alarm information and a mode of notification of the second alarm information.

A program according to an aspect is designed to cause a computer system to function as the control system 1 described above.

The control system 1 according to the present disclosure includes a computer system. The computer system includes a processor and a memory as principal hardware components. The functions of the control system 1 according to the present disclosure may be performed by making the processor execute a program stored in the memory of the computer system. The program may be stored in advance in the memory of the computer system. Alternatively, the program may also be downloaded through a telecommunications line or be distributed after having been recorded in some non-transitory storage medium such as a memory card, an optical disc, or a hard disk drive, any of which is readable for the computer system. The processor of the computer system may be implemented as a single or a plurality of electronic circuits including a semiconductor integrated circuit (IC) or a large-scale integrated circuit (LSI). As used herein, the "integrated circuit" such as an IC or an LSI is called by a different name depending on the degree of integration thereof. Examples of the integrated circuits include a system LSI, a very large-scale integrated circuit (VLSI), and an ultra large-scale integrated circuit (ULSI). Optionally, a field-programmable gate array (FPGA) to be programmed after an LSI has been fabricated or a reconfigurable logic device allowing the connections or circuit sections inside of an LSI to be reconfigured may also be adopted as the processor. Those electronic circuits may be either integrated together on a single chip or distributed on multiple chips, whichever is appropriate. Those multiple chips may be integrated together in a single device or distributed in multiple devices without limitation. As used herein, the "computer system" includes a microcontroller including one or more processors and one or more memories. Thus, the microcontroller may also be implemented as a single or a plurality of electronic circuits including a semiconductor integrated circuit or a large-scale integrated circuit.

Also, in the embodiment described above, at least some constituent elements (or the functions) of the control system 1 are integrated together in a single housing. However, this is only an example and should not be construed as limiting. Alternatively, those constituent elements (or functions) of the control system 1 may be distributed in multiple different housings. Still alternatively, at least some functions of the control system 1 (e.g., some functions of the control system 1) may be implemented as a cloud computing system as well.

### (Recapitulation)

As can be seen from the foregoing description, a control system (1) according to a first aspect includes a first acquisition unit (101), a second acquisition unit (102), and a notification processing unit (103). The first acquisition unit (101) acquires disaster presence information about presence of any disaster detected by a disaster detector (detection unit 201). The disaster detector detects the presence of the disaster in a facility (5). The second acquisition unit (102) acquires state information indicating a state concerned with a space where the disaster detector is provided. The notification processing unit (103) provides first alarm information that alerts a person to detection of the presence of the disaster by the disaster detector when the disaster presence information acquired by the first acquisition unit (101) indicates that the presence of the disaster has been detected and the state information acquired by the second acquisition unit (102) satisfies a first decision condition. The notification processing unit (103) provides second alarm information that alerts the person to the detection of the presence of the disaster by the disaster detector when the disaster presence information acquired by the first acquisition unit (101) indicates that the presence of the disaster has been detected and the state information acquired by the second acquisition unit (102) satisfies a second decision condition different from the first decision condition. The notification processing unit (103) provides, when transmitting each of the first alarm information and the second alarm information, the state information such that at least the state information is included in the first or second alarm information being provided, and/or changes a mode of display of the first alarm information and a mode of notification of the second alarm information.

According to this configuration, state information is provided to be included in alarm information being provided, and/or a mode of notification is changed. This allows, when the mode of notification is changed, a resident (or the user) of the facility (5) to determine, based on the mode of notification provided, the credibility of information about the presence of a fire detected (i.e., determine whether the alarm is false or not). When the state information is provided to be included in the alarm information, the resident (user) of the facility (5) is allowed to determine, based on the state information provided, the credibility of information about the presence of a fire detected (i.e., determine whether the alarm is false or not). In other words, this allows the resident (user) of the facility (5) to learn that the presence of a fire has been detected and also learn about the credibility of the information about the fire detection.

In a control system (1) according to a second aspect, which may be implemented in conjunction with the first aspect, the notification processing unit (103) provides, when transmitting each of the first alarm information and the second alarm information, the state information such that at least the state information is included in the first or second alarm information being provided, and changes the mode of display of the first alarm information and the mode of notification of the second alarm information.

This configuration allows the credibility of the information about the presence of a fire detected (i.e., whether the alarm is false or not) to be determined more accurately.

In a control system (1) according to a third aspect, which may be implemented in conjunction with the first or second aspect, the disaster presence information is information about the presence of a fire detected as the disaster based on a quantity of smoke. The state information includes information about a temperature detected by a temperature detector. The temperature detector detects a temperature in the space. Satisfying the first decision condition means that the temperature detected by the temperature detector is lower than a first temperature. Satisfying the second decision condition means that the temperature detected by the temperature detector is equal to or higher than the first temperature.

This configuration allows the credibility of the information about the presence of a fire detected (i.e., whether the alarm is false or not) to be determined based on the temperature.

In a control system (1) according to a fourth aspect, which may be implemented in conjunction with any one of the first to third aspects, the disaster presence information is information about the presence of a fire detected as the disaster based on a quantity of smoke. The state information includes information about a state level of air quality detected by an air quality detector. The air quality detector detects the state level of the air quality in the space. Satisfying the first decision condition means that the state level of the air quality detected by the air quality detector is lower than a first state level. Satisfying the second decision condition means that the state level of the air quality detected by the air quality detector is equal to or higher than the first state level.

This configuration allows the credibility of the information about the presence of a fire detected (i.e., whether the alarm is false or not) to be determined based on the air quality.

In a control system (1) according to a fifth aspect, which may be implemented in conjunction with any one of the first to fourth aspects, the disaster presence information is information about the presence of a fire detected as the disaster based on a quantity of smoke. The state information includes information about whether an electrical device provided in the space is operating or not. Satisfying the first decision condition means that the electrical device is not operating. Satisfying the second decision condition means that the electrical device is operating.

This configuration allows the credibility of the information about the presence of a fire detected (i.e., whether the alarm is false or not) to be determined based on the operating or non-operating status of the electrical device.

In a control system (1) according to a sixth aspect, which may be implemented in conjunction with any one of the first to fifth aspects, the state information includes history information indicating transition of the state concerned with the space.

This configuration allows the credibility of the information about the presence of a fire detected (i.e., whether the alarm is false or not) to be determined based on the history when the presence of the disaster was detected.

In a control system (1) according to a seventh aspect, which may be implemented in conjunction with any one of the first to sixth aspects, the notification processing unit (103) has contents of the first alarm information and the second alarm information displayed in a hierarchical form at a destination to which the first alarm information and the second alarm information are provided.

This configuration allows the credibility of the information about the presence of a fire detected (i.e., whether the alarm is false or not) to be determined based on the content of the information provided and displayed in a hierarchical form.

In a control system (1) according to an eighth aspect, which may be implemented in conjunction with any one of the first to seventh aspects, the first acquisition unit (101) acquires, as the disaster presence information, information indicating that the disaster detector has detected presence of the disaster.

According to this configuration, there is no need for the control system (1) to determine whether any disaster is present or not, and therefore, the control system (1) may be provided separately from a device for detecting the presence of a fire.

In a control system (1) according to a ninth aspect, which may be implemented in conjunction with any one of the first to seventh aspects, the disaster presence information indicates whether or not the disaster detector has detected presence of any disaster. The notification processing unit (103) determines whether or not the disaster presence information indicates presence of any disaster detected.

According to this configuration, the control system (1) determines whether or not any disaster is present. Thus, this configuration is effectively applicable to a situation where the control system (1) forms an integral part of a fire detector device.

A program according to a tenth aspect is designed to cause a computer to function as the control system (1) according to any one of the first to ninth aspects.

This program allows the resident (user) of the facility (5) to learn that the presence of a fire has been detected and also learn about the credibility of the information about the fire detection.

A control method according to an eleventh aspect includes a first acquisition step, a second acquisition step, and a notification processing step. The first acquisition step includes acquiring disaster presence information about presence of any disaster detected by a disaster detector (such as the detection unit 201). The disaster detector detects the presence of the disaster in a facility (5). The second acquisition step includes acquiring state information indicating a state concerned with a space where the disaster detector is provided. The notification processing step includes providing first alarm information that alerts a person to detection of the presence of the disaster by the disaster detector when the disaster presence information acquired in the first acquisition step indicates that the presence of the disaster has been detected and the state information acquired in the second acquisition step satisfies a first decision condition. The notification processing step further includes providing second alarm information that alerts the person to the detection of the presence of the disaster by the disaster detector when the disaster presence information acquired in the first acquisition step indicates that the presence of the disaster has been detected and the state information acquired in the second acquisition step satisfies a second decision condition different from the first decision condition. The notification processing step includes, when transmitting each of the first alarm information and the second alarm information, providing the state information such that at least the state information is included in the first or second alarm information being provided, and/or changing a mode of display of the first alarm information and a mode of notification of the second alarm information.

This control method allows the resident (user) of the facility (5) to learn that the presence of a fire has been detected and also learn about the credibility of the information about the fire detection.

### Reference Signs List

- 1: Control System
- 5: Facility
- 10: Controller
- 20, 21, 21a―21d: Alarm Device
- 30, 30a, 30b, 30c, 30d, 30e: Temperature Sensor
- 35, 35a, 35b, 35c, 35d, 35e: Air Quality Sensor
- 101: First Acquisition Unit
- 102: Second Acquisition Unit
- 103: Notification Processing Unit
- 201: Detection Unit
- E1-E5: Space

## Claims

1. A control system comprising:
a first acquisition unit configured to acquire disaster presence information about presence of any disaster detected by a disaster detector, the disaster detector being configured to detect the presence of the disaster in a facility;
a second acquisition unit configured to acquire state information indicating a state concerned with a space where the disaster detector is provided; and
a notification processing unit configured to provide first alarm information that alerts a person to detection of the presence of the disaster by the disaster detector when the disaster presence information acquired by the first acquisition unit indicates that the presence of the disaster has been detected and the state information acquired by the second acquisition unit satisfies a first decision condition,
the notification processing unit being configured to provide second alarm information that alerts the person to the detection of the presence of the disaster by the disaster detector when the disaster presence information acquired by the first acquisition unit indicates that the presence of the disaster has been detected and the state information acquired by the second acquisition unit satisfies a second decision condition different from the first decision condition,
the notification processing unit being configured to, when transmitting each of the first alarm information and the second alarm information, provide the state information such that at least the state information is included in the first or second alarm information being provided, and/or change a mode of display of the first alarm information and a mode of notification of the second alarm information.

2. The control system of claim 1, wherein
the notification processing unit is configured to, when transmitting each of the first alarm information and the second alarm information, provide the state information such that at least the state information is included in the first or second alarm information being provided, and change the mode of display of the first alarm information and the mode of notification of the second alarm information.

3. The control system of claim 1 or 2, wherein
the disaster presence information is information about the presence of a fire detected as the disaster based on a quantity of smoke,
the state information includes information about a temperature detected by a temperature detector, the temperature detector being configured to detect a temperature in the space,
satisfying the first decision condition means that the temperature detected by the temperature detector is lower than a first temperature, and
satisfying the second decision condition means that the temperature detected by the temperature detector is equal to or higher than the first temperature.

4. The control system of any one of claims 1 to 3, wherein
the disaster presence information is information about the presence of a fire detected as the disaster based on a quantity of smoke,
the state information includes information about a state level of air quality detected by an air quality detector, the air quality detector being configured to detect the state level of the air quality in the space,
satisfying the first decision condition means that the state level of the air quality detected by the air quality detector is lower than a first state level, and
satisfying the second decision condition means that the state level of the air quality detected by the air quality detector is equal to or higher than the first state level.

5. The control system of any one of claims 1 to 4, wherein
the disaster presence information is information about the presence of a fire detected as the disaster based on a quantity of smoke,
the state information includes information about whether an electrical device provided in the space is operating or not,
satisfying the first decision condition means that the electrical device is not operating, and
satisfying the second decision condition means that the electrical device is operating.

6. The control system of any one of claims 1 to 5, wherein
the state information includes history information indicating transition of the state concerned with the space.

7. The control system of any one of claims 1 to 6, wherein
the notification processing unit is configured to have contents of the first alarm information and the second alarm information displayed in a hierarchical form at a destination to which the first alarm information and the second alarm information are provided.

8. The control system of any one of claims 1 to 7, wherein
the first acquisition unit is configured to acquire, as the disaster presence information, information indicating that the disaster detector has detected presence of the disaster.

9. The control system of any one of claims 1 to 7, wherein
the disaster presence information indicates whether or not the disaster detector has detected presence of any disaster, and
the notification processing unit is configured to determine whether or not the disaster presence information indicates presence of any disaster detected.

10. A program designed to cause a computer to function as the control system according to any one of claims 1 to 9.

11. A control method comprising:
a first acquisition step including acquiring disaster presence information about presence of any disaster detected by a disaster detector, the disaster detector being configured to detect the presence of the disaster in a facility;
a second acquisition step including acquiring state information indicating a state concerned with a space where the disaster detector is provided; and
a notification processing step including:
providing first alarm information that alerts a person to detection of the presence of the disaster by the disaster detector when the disaster presence information acquired in the first acquisition step indicates that the presence of the disaster has been detected and the state information acquired in the second acquisition step satisfies a first decision condition,
providing second alarm information that alerts the person to the detection of the presence of the disaster by the disaster detector when the disaster presence information acquired in the first acquisition step indicates that the presence of the disaster has been detected and the state information acquired in the second acquisition step satisfies a second decision condition different from the first decision condition,
the notification processing step including, when transmitting each of the first alarm information and the second alarm information, providing the state information such that at least the state information is included in the first or second alarm information being provided, and/or changing a mode of display of the first alarm information and a mode of notification of the second alarm information.
